Europäisches Patentamt

European Patent Office

Office européen des brevets

(19)

(11) Veröffentlichungsnummer: **0 010 555**
A1

(12) # EUROPÄISCHE PATENTANMELDUNG

(21) Anmeldenummer: 78101812.2

(22) Anmeldetag: 21.12.78

(51) Int. Cl.³: **C 08 L 67/06,** C 08 J 3/20,
B 44 C 3/04

(30) Priorität: 30.09.78 CH 10144/78

(43) Veröffentlichungstag der Anmeldung: 14.05.80
Patentblatt 80/10

(34) Benannte Vertragsstaaten: DE FR GB

(71) Anmelder: Heimann, Oscar, Sonnrisa, CH-6052
Hergiswil (CH)
Anmelder: Brandenberger, Hansruedy,
Stotzenackerweg 5, CH-6343 Risch (CH)

(72) Erfinder: Heimann, Oscar, Sonnrisa, CH-6052
Hergiswil (CH)
Erfinder: Brandenberger, Hansruedy,
Stotzenackerweg 5, CH-6343 Risch (CH)

(74) Vertreter: Utiger, Heinrich, Prof. Dr. phil., David
Hessweg 16 Postfach 145, CH-8060 Zürich (CH)

(54) Verfahren zur Herstellung einer veredelten Kunststoffoberfläche.

(57) Verfahren zur Herstellung einer veredelten Kunststoffoberfläche vermittelst eines flüssigen, polymerisierbaren
Polyesterharzgemisches, wobei die Oberflächenspannung
des flüssigen Polyesters sowie diejenige des ungesättigten, organischen Lösungsmittels durch Zusatz eines Netzmittels sich gegenüber derjenigen der zuzusetzenden Stoffe
derart erhöht, daß ein rasches Sinken derselben im noch
flüssigen Gemisch ermöglicht wird.

- 1 -

## Verfahren zur Herstellung einer veredelten Kunststoffoberfläche.

Die Erfindung betrifft ein Verfahren zur Herstellung einer veredelten Kunststoffoberfläche vermittelst eines flüssigen, polymerisierbaren Polyesterharzgemisches, bestehend aus Polyester, Härter, Beschleuniger, sowie den die Oberflächenveredelung betreffenden Zusätzen.

Es ist bekannt, Türfüllungen, Tischplatten, Stuhllehnen, Bilderrahmen und dergleichen durch Giessen eines polymerisierbaren Kunststoffes in eine entsprechende Giessform herzustellen.

Damit der an sich mehr oder weniger transparente Kunststoff das Aussehen eines metallisierten, versteinerten oder holzartigen Werkstoffes bekommt, setzt man der Giessmasse Metallpulver, Holzmehl oder Pigmente zu. Der Nachteil dieses Verfahrens ist darin zu erblicken, dass die Zusätze, die einen bestimmten Oberflächeneffekt erzielen

sollen, infolge ihrer kleinen Sinkgeschwindigkeit nicht an der Oberfläche der Seite erscheinen, die der Giessform benachbart ist.

Es hat sich herausgestellt, dass veredelnde Zusätze wie Bronzepulver, Aluminiumpulver, Zinnpulver, sowie Holzmehl usw. eine viel kleinere Oberflächenspannung aufweisen, als das zur Polymerisation gelangende Kunststoffgemisch, sodass aus diesen Gründen ein Sinken der Zusätze nur sehr langsam vor sich geht. Der gleichzeitig einsetzende Polymerisationsvorgang verhindert in der Folge ein weiteres Absinken der zugesetzten Partikelchen, was sehr zum Nachteil des Endproduktes ausfällt.

Ueberraschenderweise hat es sich gezeigt, dass, wenn man die Oberflächenspannung eines flüssigen, polymerisierbaren Polyesterharzgemisches durch Zusatz eines Gemisches, bestehend aus einem organischen, ungesättigten Lösungsmittel und einem organischen Netzmittel, bestehend aus einem Fettsäurealkoholamid, vermischt, sich derart vergrössert, dass die zugesetzten Stoffe wie Metallpulver, Holzmehl und dergleichen, in der Lösung rascher sinken, als unter normalen Umständen. In diesem Falle verarmt die Oberfläche des Polyesterharzgemisches während des Polymerisationsvorganges an den zugesetzten, veredelnden Stoffen derart, dass die, die Oberflächeneffekte erzielenden Zusätze an der Stirnseite des Kunststoffes im gewünschten Masse zur Geltung kommt.

Als Fettsäurealkoholamide haben sich die Fettsäuren der mono- und/oder Dieaethanolamide der Stearinsäure, der Laurinsäure und der Oleinsäure als besonders wirksam erwiesen.

Der vorliegenden Erfindung liegt die Aufgabe zugrunde, ein Verfahren zur Herstellung einer veredelten Kunststoffoberfläche zu schaffen, welche die genannten Nachteile vermeidet.

Zum besseren Verständnis des Verfahrens wird dasselbe anhand eines Ausführungsbeispiels nachstehend beschrieben.

Ausführungsbeispiel

Es soll eine Türfüllung mittelst eines polymerisierbaren Polyesterharzgemisches hergestellt werden, deren Oberfläche eine Schieferstruktur aufweist und wobei das Schiefermaterial auch vorgetäuscht wird.

Durch Abguss einer Schieferstruktur mit Silikonkautschuk wird eine Giessform hergestellt.

Als ungesättigtes Lösungsmittel nehme man 100 g Styrol und versetze dieses mit 20 g Lauryldiaethylalkoholamid und füge dieser Lösung 2000 g Zinnpulver bei, wobei man das Ganze gut durchmischt. Hierauf nehme man 1000 g eines flüssigen, polymerisierbaren Polyesterharzes, versetze dasselbe mit 100 g eines Kobaltaktivators und gebe dieser Lösung die vorbereitete Styrolmischung zu, wobei das Ganze unter tüchtigem Rühren mit 160 g eines Härters in

0010555

Form von Methylaethylketonsuperoxid und giesse die ganze Masse in die vorbereitete Giessform.

Nach wenigen Minuten hat die Masse die nötige Härte erreicht. Die freie Rückfläche des Kunstharzes kann mit einem beliebigen Material überdeckt werden, derart, dass sich eine feste Verbindung zwischen dem Kunstharz und dem überdeckenden Material ergibt. Das Ganze wird anschliessend aus der Giessform genommen und während eines Tages gelagert.

Die auf diese Art und Weise hergestellte Türfüllung macht den Eindruck einer Schieferplattenfüllung. Sie ist einer solchen zumindest äusserlich ähnlich.

Auf diese Art und Weise oberflächenveredelte Kunststoffe eignen sich als Elemente für den Innenausbau, wie auch für wetterfeste Aussenverkleidungen. Das erfindungsgemässe Verfahren bedeutet eine Bereicherung des Sektors der Oberflächenveredelung ganz allgemein.

Patentansprüche:

1. Verfahren zur Herstellung einer veredelten Kunststoffoberfläche vermittelst eines flüssigen, polymerisierbaren Polyesterharzgemisches, bestehend aus Polyester, Härter, Beschleuniger, sowie den, die Oberflächenveredelung bewirkenden Zusätzen, dadurch gekennzeichnet, dass die Oberflächenspannung des flüssigen Polyesters, sowie diejenige des ungesättigten, organischen Lösungsmittels, durch Zusatz eines Netzmittels in der Grössenordnung von 0,5 - 2,0 % sich gegenüber derjenigen der zuzusetzenden Stoffe derart erhöht, dass ein rasches Sinken derselben im noch flüssigen Gemischt ermöglicht wird, wobei die Stirnseite der Kunststoffoberfläche an Partikelchen angereichert wird und dass die entgegengesetzte Oberfläche an ihnen jedoch verarmt.

2. Verfahren zur Herstellung einer veredelten Kunststoffoberfläche nach Patentanspruch 1, dadurch gekennzeichnet, dass als Netzmittel ein Fettsäurealkoholamid aus der Reihe der Fett-, Stearin-, Lautin- und Oleinsäure verwendet wird.

3. Produkt, hergestellt gemäss dem Verfahren nach Patentanspruch 1 und 2.

**Europäisches Patentamt**

# EUROPÄISCHER RECHERCHENBERICHT

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - A - 2 234 893 (KARL REIMER)<br>* Anspruch *<br><br>-- | 1,3 | C 08 L 67/06<br>C 08 J 3/20<br>B 44 C 3/04 |
| | FR - A - 1 462 079 (I.C.I.)<br>* Zusammenfassung I,1$^{\circ}$; Seite 2, Zeilen 22-27 *<br><br>-- | 1 | |
| | FR - A - 1 082 385 (ROHM & HAAS)<br>* Zusammenfassung *<br><br>---- | 1 | RECHERCHIERTE SACHGEBIETE (Int. Cl. 3) |
| | | | C 08 L 67/06<br>C 08 J 3/20<br>B 44 C 3/04<br>B 44 F 9/04<br>9/00 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-12-1979 | HALLEMEESCH |

EPA form 1503.1 06.78